**Europäisches Patentamt**

**European Patent Office**

**Office européen des brevets**

(19)

(11) Publication number : **0 506 355 A1**

## (12) EUROPEAN PATENT APPLICATION

(21) Application number : **92302554.8**

(22) Date of filing : **25.03.92**

(51) Int. Cl.⁵ : **F16L 41/06, F16L 47/00**

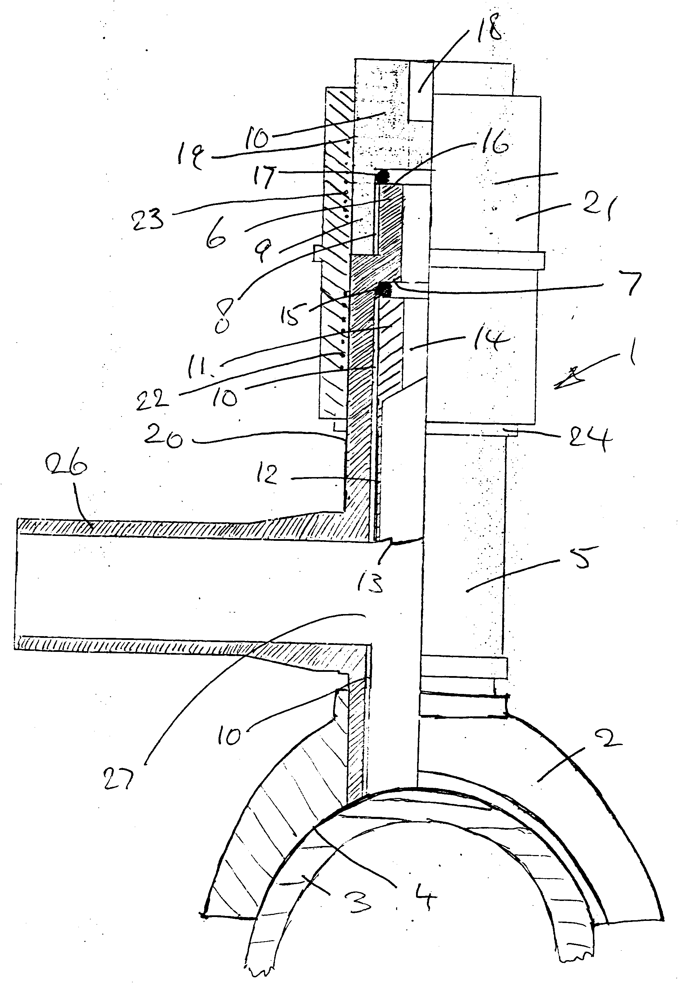

A request to replace no."10" in the figure by no."25" has been filed pursuant to Rule 88 EPC. A decision on the request will be taken during the proceedings before the Examining Division (Guidelines for Examination in the EPO, A-V, 2.2). >1

(30) Priority : **25.03.91 GB 9106266**

(43) Date of publication of application :
**30.09.92 Bulletin 92/40**

(84) Designated Contracting States :
**AT BE CH DE DK ES FR GB GR IT LI LU MC NL PT SE**

(71) Applicant : **VICTAULIC PLC**
**P.O. Box 13 46-48 Wilbury Way**
**Hitchin Hertfordshire SG4 0UD (GB)**

(71) Applicant : **RUTLAND PLASTICS LIMITED**
**Cold Overton Road**
**Oakham Rutland Leicestershire LE15 6NU (GB)**

(72) Inventor : **Wall, David John, Rounfields**
**15 Church Lane, Caldecott, Nr. Market Harborough**
**Leicestershire LE16 8RW (GB)**
Inventor : **Beechey, Robert Edward**
**52 Redland Road, Oakham**
**Rutland, Leicestershire LE15 6PJ (GB)**

(74) Representative : **Heath, Peter William Murray et al**
**FRY HEATH & CO. St. Georges House 6 Yattendon Road**
**Horley Surrey RH6 7BS (GB)**

(54) **Plastics pipe fittings.**

(57)   A tapping tee (1) for plastics pipes includes a saddle (2) portion adapted to be secured and sealed upon the pipe (3) ; a hollow stack (5) extending outwardly from the saddle (2) portion ; an outlet tube opening (27) transversely from the stack (5) ; a cutting device disposed within the stack (5) having an annular cutting head (12), the device being movable axially along the stack (5) to engage the wall of the pipe to be cut, and being rotatably within the stack (5) to effect a cutting action by the cutting head (12) said stack (5) having an internal shoulder (7) limiting movement of the cutting device along the stack (5) away from the saddle ; and an end cap (10) for securing upon the open end (16) of the stack (5) after completion of the cutting operation.

EP 0 506 355 A1

This invention relates to plastics pipe fittings; and more particularly to those pipe fittings known as "tapping tees" for use with fluid carrying plastics pipes.

Tapping tees for such pipes essentially comprise a fitting adapted to be secured sealingly to the outer periphery of the pipe, and carrying a facility for the cutting of an opening into the pipe through the secured fitting whereby fluid can be fed from the pipe through the fitting to a user device or installation, or alternatively for monitoring means for example such as pressure monitoring means, to be connected to the pipe.

The invention is especially applicable to tapping tees for use with high pressure gas pipes.

It is to be understood that the expression "pipe" as used herein includes pipes and tubes as such and also pipe-like members and fittings for use in pipework such as bends, elbows, tee connectors, flange adaptors and parts and devices adapted to be fitted by pipe-like parts to pipework such as valves and pumps.

Plastics pipe, typically polyethylene mains pipes and fittings, including tapping tee fittings have hitherto been used used for the transmission and/or distribution of gaseous fuels with a gas pressure, typically, of up to 4 bar. With such systems, a common form of tapping tee has a saddle portion arranged to be fusion welded by means of embedded electrically conductive heating wires, for example, as in our GB Patent 2136074B; a hollow shank directed outwardly from the saddle portion and including therewithin a rotatable cutting device having a cylindrical cutting head and a side pipe extending from the shank through which, after operation of the cutting device, gas from within the mains pipe is arranged to flow. After sealing the free end of the shank, through which the cutting tool is operated, is closed and sealed usually by means of a screw cap.

As developments in polyethylene and pipe manufacture proceed over the years, the pressure rating of the pipes has increased, presenting operational problems for tapping tees of the kind just described in possibilities of blow out of the included cutting device, possibilities for significant escapes of flammable gases during assembly of the tapping tees and after, as well as concern for the security of the stack sealing means.

It is an object of the present invention to overcome or at least substantially reduce at least some of these problems.

In accordance the present invention there is provided a tapping tee for plastics pipes including a saddle portion adapted to be secured and sealed upon the pipe; a hollow stack extending outwardly from the saddle portion; an outlet tube opening transversely from the stack; a cutting device disposed within the stack having an annular cutting head, the device being moveable axially along the stack to engage the wall of the pipe to be cut, and being rotatable within the stack to effect a cutting action by the cutting head said stack having an internal shoulder limiting movement of the cutting device along the stack away from the saddle; and an end cap for securing upon the open end of the stack after completion of the cutting operation.

By means of the invention as defined it is to be noted that the cutting device cannot suffer a blow out from the stack during operation due to the presence of the shoulder against which the end of the cutting device remote from the cutting head abuts at its most extreme position away from the saddle portion.

In a preferred form of the invention the free end of the stack is closeable by means of a cap, and a weldable sleeve is provided to fit about the cap and the outer end of the stack. Such weldable sleeve may include embedded electrical heating wires around its internal periphery so disposed that upon the passage of electric current therethrough when the sleeve is disposed about the cap and the outer end of the stack, it is fusion welded to the outer peripheries of the cap and the stack.

Such an arrangement of the sleeve with the tapping tee fitting of the invention ensures that after final tapping operation the cap may be securely sealed to the end of the stack without risk of displacement.

Again, in a preferred form of the invention annular sealing gaskets may be provided located between the end of the cutting device remote from the cutting head and the internal shoulder of the stack so that when the cutting device is withdrawn from the saddle after cutting a disc from the pipe to which it is secured, with (in the usual way) the cut disc remaining within the cylindrical cutting head, a seal is provided reducing leakage of gas past or around the cutting device to the outside of the stack.

In a still further preferred embodiment of the invention the cutting device is of such dimensions, and the location of the outlet tube from the side of the stack is such that a portion of the outer periphery of the cylindrical cutting head obscures the entry to the outlet tube before the cutter is withdrawn from the wall of the pipe being cut, thereby preventing any significant escape of gas through the outlet, and enabling the outlet to be connected to controlling mechanism before fully withdrawing the cutter to its extreme removed position and thereby opening the inlet to the outlet tube to gas from the pipe being tapped.

An annular gasket may be provided between the end of the stack and an adjacent internal surface of the cap.

In order that the invention may be more readily understood one embodiment thereof will now be described by way of example with reference to the accompanying drawing which is a part sectional front elevation of a tapping tee in accordance with the invention.

Referring now to the drawing it is to be seen that the tapping tee 1 is, apart from parts hereinafter specified, formed of polyethylene material. It comprises a saddle 2 arranged to be fitted over a polyethylene mains gas pipe 3 to be tapped and sealingly secured thereto for example by electrofusion welding in the manner described and defined in our GB Patent No 2136074B. It is to be observed that the saddle has a curved internal surface 4 arranged to conform to the outer periphery of the pipe 3 to be tapped.

Welded integrally within the saddle 2 is a hollow tubular stack 5 which carries adjacent the saddle an outwardly extending outlet tube 26. The stack 5 has, towards its outer end, a reduced diameter portion 6, both internally and externally, thereby providing an internal shoulder 7. The external surface of the reduced diameter outer part of the stack portion is provided with threading 8, and is adapted to accommodate an internally threaded side wall 9 of a cap 10 fitting over the outer end of the stack.

Inwardly of the internal shoulder the stack is provided with an internal threading 25 arranged to cooperate with external threading of a steel cutting device 11 of cylindrical outer form. The cutting device has at its end facing the saddle portion a cylindrial cutting head 12 having cutting teeth 13 in its end wall, whilst at its other end, the cutting device is provided with a hexagonal internal opening 14 to enable the cutting device (by means of an appropriate key) to be rotated and thereby driven by its mutual threaded engagement with the internal wall of the stack axially along the stack 5.

A gasket 15 is provided between the internal shoulder 7 of the stack and the outer end of the cutting device. Again, a gasket 17 is provided between the outer end wall 16 of the stack and the inner wall of the cap. The cap 10 is provided with a hexagonal opening 18 in its top surface to enable it to be turned upon its threading by an appropriate key for tightening upon the gasket 17 at the outer end of the stack.

It will be observed that the outer peripheral walls 19,20 of the cap and of the main part of the stack respectively are aligned. This enables a coupling sleeve 21 to be fitted over the cap 10 and the end of the stack 5 after the operation of the tapping tee has been completed. The coupling sleeve is provided with two sets 22,23 of electrofusion electrical heating wires embedded in its internal wall, one surrounding a part of the cap 10, and the other surrounding a part of the stack 5 whereby upon heating of the wires by the passing of electric current therethrough electrofusion welding between the coupling sleeve 21 and the cap 10 and the stack 5 occurs so that the unit is then permanently secured and sealed.

An annular stop ring 24 is provided around the stack to ensure correct location of the coupling sleeve 21 on the cap 10 and the stack 5.

In operation of the tapping tee the stack 5 is first welded into an appropriate internally dimensioned saddle 2 for the size of gas carrying polyethylene under pressure pipe to be tapped.

The saddle 2 is then sealingly secured to the pipe 3 to be tapped.

The cap 18 is unscrewed from the stack 5 (the coupling sleeve 21 at this stage not being present), and pressure testing of the welded-on saddle via the stack may now be carried out from a source of pressure.

The cutting device 11 is now engaged with an appropriate hexagon headed key and screwed down the internal threading 25 of the stack 5 to engage and cut the peripheral wall of the under pressure pipe 3 within the saddle 2. After completion of the cut the disc (commonly known as the "coupon") (not shown) of the peripheral wall of the pipe 3 cut by the cutting device is retained within the cylindrical cutting head 12 and restricts flow of gas therethrough. At this stage a limited quantity of gas, forced by pressure from within the pipe 3 being tapped, will escape through the threading between the cutting device 11,12 and the stack 5. It is to be noted that, also at this stage, the outer threaded periphery of the cutting device 11,12 obscures the inlet 27 to the outlet tube 26, which is connected as required to a service user unit or a monitoring or valve device before the cutting device is retracted from the pipe 3, carrying the coupon, again opening the inlet 27 to the outlet pipe 26. The retraction of the cutting device 11,12 is continued by the operating key until its free end compresses against the annular gasket 15 against the internal shoulder of the stack forming a seal therewith. At this point gas is no longer able to pass via the threading between the cutting device 11,12 and the stack 5 to the free end of the stack, so that the assembly is effectively sealed against gas escape. As previously noted the internal shoulder 17 in the stack 5 prevents any possibility of the cutting device 11,12 being blown by the internal pressure of the gas within the pipe 3 from the outer end of the stack 5.

The cap 10 may now be screwed down upon the stack such that the gasket 17 between the end wall 16 of the stack 5 and the inside of the cap 10 is compressed preventing any seapage of gas therepast. Finally, to permanently seal and secure the cap 10 upon the stack 5 when the work of the tapping tee is completed, the coupling sleeve 21 may be slid over the cap 10 and stack 5 until engaging the annular stop 24, and the two sets of heating wires 22,23 then energised to seal the coupling sleeve 21 to the cap 10 and to the stack 5.

By means of the invention a tapping tee of a fully operationally safe nature is provided which significantly reduces risk of gas escape beyond an insignificant level and overcomes risks of safety with respect to blow out of the cutting device and of the cap.

It is to be understood that the foregoing is merely exemplary of tapping tee pipe fittings in accordance with the invention and that modifications can readily be made thereto without departing from the true scope of the invention.

## Claims

1. A tapping tee for plastics pipes including a saddle portion adapted to be secured and sealed upon the pipe; a hollow stack extending outwardly from the saddle portion; an outlet tube opening transversely from the stack; a cutting device disposed within the stack having an annular cutting head, the device being movable axially along the stack to engage the wall of the pipe to be cut, and being rotatable within the stack to effect a cutting action by the cutting head said stack having an internal shoulder limiting movement of the cutting device along the stack away from the saddle; and an end cap for securing upon the open end of the stack after completion of the cutting operation.

2. The tapping tee as claimed in Claim 1 wherein the free end of the stack is closeable by means of a cap; and a weldable sleeve is provided to fit about the cap and the outer end of the stack.

3. The tapping tee as claimed in Claim 2 wherein the weldable sleeve includes embedded electrical heating wires around its internal periphery so disposed that upon the passage of electric current therethrough when the sleeve is disposed about the cap and the outer end of the stack, it is fusion welded to the outer periphery of the cap and the stack.

4. A tapping tee as claimed in Claim 2 or 3 wherein an annular gasket is provided between the end of the stack and the adjacent internal surface of the cap.

5. A tapping tee as claimed in any one of the preceding Claims including an annular sealing gasket located between the end of the cutting device remote from the cutting head and the internal shoulder of the stack.

6. A tapping tee as claimed in any one of the preceding Claims wherein the cutting device is of such dimensions, and the location of the outlet tube from the side of the stack is such, that a portion of the outer periphery of the cylindrical cutting head obscures the entry to the outlet tube, in use, prior to the cutter being withdrawn from the wall of the pipe being cut.

7. A tapping tee substantially shown in and as hereinbefore described with reference to the accompanying drawing.

**European Patent Office**

# EUROPEAN SEARCH REPORT

Application Number

EP 92 30 2554

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | US-A-3 307 435 (C.E. FLOREN) | 1,4,5 | F16L41/06 |
| A | * column 5, line 10 - line 22; claim 1; figures * | 6 | F16L47/00 |
| | --- | | |
| X | GB-A-2 080 464 (EDWARD BARBER & COMPANY LTD.) | 1,5 | |
| A | * figure * | 4 | |
| | --- | | |
| A | US-A-3 313 315 (T.F. ROTHWELL) | 1,5 | |
| | * figures * | | |
| | --- | | |
| A | US-A-3 045 511 (R.E. RISLEY) | 1 | |
| | * figures 2,3 * | | |
| | ----- | | |

**TECHNICAL FIELDS SEARCHED (Int. Cl.5 )**

F16L

The present search report has been drawn up for all claims

| Place of search | Date of completion of the search | Examiner |
|---|---|---|
| THE HAGUE | 01 JUNE 1992 | BUDTZ-OLSEN A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)